# EUROPÄISCHE PATENTANMELDUNG

(11) **EP 4 338 885 A1**
(43) Veröffentlichungstag der Anmeldung: **20.03.2024**
(21) Anmeldenummer: 22195277.3
(22) Anmeldetag: 13.09.2022
(51) Int. Cl.: B23Q 11/00

(54) **WERKZEUGMASCHINE MIT STAUBSAMMELBOX UND STAUBSAMMELBOX**

(71) Anmelder: Hilti Aktiengesellschaft, 9494 Schaan (LI)
(72) Erfinder: Britz, Rory, 86807 Buchloe (DE); Hartmann, Markus, 87665 Mauerstetten (DE)
(74) Vertreter: Hilti Aktiengesellschaft Corporate Intellectual Property

(57) **Zusammenfassung**

Werkzeugmaschine (10), die mit einem länglichen, sich in eine Raumrichtung nach vorne erstreckenden Werkzeug (12) verbindbar ist, wobei die Werkzeugmaschine dazu eingerichtet ist, das Werkzeug zu einer drehenden und/oder schlagenden Bewegung anzutreiben. Die Werkzeugmaschine umfasst eine Staubsammelbox (50) zum Absaugen von staubbeladener Luft (14) aus einem Arbeitsbereich (16) der Werkzeugmaschine, wobei der Staub mittels eines Filters (52) aus der staubbeladenen Luft herausgefiltert werden kann. Eine virtuelle Mittelebene (20) kann durch einen Hauptkörper (18) der Werkzeugmaschine und/oder der Staubsammelbox gelegt werden, wobei die virtuelle Mittelebene den Hauptkörper in zwei Hälften (22, 24) teilt, wobei ein Einlass (56) der Staubsammelbox für die staubbeladene Luft überwiegend auf der einen und der Filter der Staubsammelbox überwiegend auf der anderen Seite der virtuellen Mittelebene angeordnet ist.

## Beschreibung

Die vorliegende Erfindung betrifft eine Werkzeugmaschine, die mit einem länglichen, sich in eine Raumrichtung nach vorne erstreckenden Werkzeug verbindbar ist, wobei die Werkzeugmaschine dazu eingerichtet ist, das Werkzeug zu einer drehenden und/oder schlagenden Bewegung anzutreiben. Die Werkzeugmaschine umfasst eine Staubsammelbox zum Absaugen von staubbeladener Luft aus einem Arbeitsbereich der Werkzeugmaschine, wobei der Staub mittels eines Filters aus der staubbeladenen Luft herausgefiltert werden kann. Eine virtuelle Mittelebene kann durch einen Hauptkörper der Werkzeugmaschine und/oder der Staubsammelbox gelegt werden, wobei die virtuelle Mittelebene den Hauptkörper in zwei Hälften teilt, wobei ein Einlass der Staubsammelbox für die staubbeladene Luft überwiegend auf der einen und der Filter der Staubsammelbox überwiegend auf der anderen Seite der Mittelebene angeordnet ist. In einem zweiten Aspekt betrifft die Erfindung eine Staubsammelbox für eine Werkzeugmaschine, wobei der Einlass und der Filter der Staubsammelbox auf unterschiedlichen Seiten, d.h. in unterschiedlichen Hälften der Stabsammelbox, vorliegen.

### Hintergrund der Erfindung:

Im Bereich der Werkzeugmaschinen, insbesondere im Bereich der Bohrhämmer, sind Staubsammelboxen bekannt, die mit der Werkzeugmaschine verbunden werden können, um staubbeladene Luft aus einem Arbeitsbereich der Werkzeugmaschine abzusaugen. Werkzeugmaschinen können mit Werkzeugen verbunden werden, mit denen Arbeiten verrichtet werden können. Im Falle eines Bohrhammers kann der Bohrhammer mit einem länglichen Werkzeug verbunden werden, das von dem Gerät zu einer drehenden und/oder einer schlagenden Bewegung angetrieben werden kann. Bei sogenannten «onboard» Staubsammelboxen für Werkzeugmaschinen sind hauptsächlich zwei unterschiedliche Typen von Staubsammelboxen bekannt: Auf der einen Seite sind Staubsammelboxen bekannt, bei denen der Absaugkanal zwischen Arbeitsbereich und Staubsammelbox entlang des Werkzeugs auf einer Seite des Werkzeugs der Werkzeugmaschine geführt wird. Auf der anderen Seite sind Staubsammelboxen bekannt, bei denen der Absaugkanal in oder in der Nähe einer Ebene geführt wird, wobei die Ebene eine Arbeitsachse und eine Griffachse der Werkzeugmaschine beinhaltet. Diese Ebene wird daher vorzugsweise auch als «Arbeitsebene» der Werkzeugmaschine bezeichnet. Die Arbeitsachse entspricht dabei der Achse, in der das Werkzeug der Werkzeugmaschine liegt, wobei die Griffachse den Hauptgriff der Werkzeugmaschine beinhaltet. Die Staubsammelboxen mit der seitlichen Führung des Absaugkanals weisen häufig eine gute Absaugleistung auf, sind aber oft sehr groß und unhandlich, so dass die Werkzeugmaschine, wenn sie mit einer solchen Staubsammelbox verbunden ist, ebenfalls sehr groß und unhandlich wird. Dies kann die Handhabung der Werkzeugmaschine erschweren und die Arbeit mit der Werkzeugmaschine wenig komfortabel und mühsam machen. Außerdem müssen Werkzeugmaschinen mit solchen Staubsammelboxen vor dem Transport in einer Transportkiste häufig auseinander gebaut werden, um die Werkzeugmaschine und die Staubsammelbox in der Transportkiste verstauen zu können. Dieses Auseinanderbauen und Verstauen kann aber Arbeitszeit kosten und ist daher unerwünscht.

Bei den Staubsammelboxen, bei denen der Absaugkanal in der Arbeitsebene der Werkzeugmaschine liegt, liegt der Filter zum Herausfiltern des Staubs aus der staubbeladenen Luft häufig an einer Vorder- oder Rückwand der Staubsammelbox vor. Dadurch kann sich nachteiliger Weise Staub auf dem Filter sammeln, wenn mit der Werkzeugmaschine auf einem Untergrund, wie einem Boden oder an einer Decke, d.h. über Kopf, gearbeitet wird. Auf diese Weise kann der Filter schnell verstopfen, so dass beispielsweise nur eine geringe Anzahl von Bohrlöchern mit der Werkzeugmaschine erstellt werden kann, bevor der Filter ausgetauscht oder abgereinigt werden muss.

Die Aufgabe, die der vorliegenden Erfindung zugrunde liegt, besteht darin, die vorstehend beschriebenen Mängel und Nachteile des Standes der Technik zu überwinden und eine Werkzeugmaschine bereitzustellen, die die Vorteile der bekannten Designs miteinander verbindet. Dabei soll insbesondere ermöglicht werden, in jedem Anwendungsfall der Werkzeugmaschine eine möglichst große Anzahl von Bohrlöchern zu erstellen, bevor der Filter ausgetauscht oder abgereinigt werden muss. Darüber hinaus soll die bereitzustellende Staubsammelbox besonders kompakt und handlich ausgebildet sein, um eine handliche und komfortable Werkzeugmaschine bereitstellen zu können. Die Fachwelt würde es begrüßen, wenn ein kostengünstiger und leicht auszutauschender Filter für die Staubsammelbox bereitgestellt werden könnte und wenn die Staubsammelbox besonders dicht ausgebildet sein könnte, um eine vorhandene Saugleistung optimal auszunutzen und keine Leckage aufzuweisen.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Werkzeugmaschine vorgesehen, die mit einem länglichen, sich in eine Raumrichtung nach vorne erstreckenden Werkzeug verbindbar ist. Die Werkzeugmaschine ist dazu eingerichtet, das Werkzeug zu einer drehenden und/oder schlagenden Bewegung anzutreiben. Die Werkzeugmaschine umfasst eine Staubsammelbox und ist mit dieser lösbar verbindbar, wobei die Staubsammelbox dazu eingerichtet ist, staubbeladene Luft aus einem Arbeitsbereich der Werkzeugmaschine abzusaugen und den Staub aus der staubbeladenen Luft mittels eines Filters herauszufiltern, so dass der Staub in einem Innenraum der Staubsammelbox bis zu einer Entleerung gesammelt werden kann. Es kann eine virtuelle Mittelebene durch einen Hauptkörper der Werkzeugmaschine und/oder der Staubsammelbox gelegt werden, wobei die virtuelle Mittelebene dazu eingerichtet ist, den Hauptkörper in einer Schnittdarstellung von einer vorderen Raumrichtung blickend in eine erste Seite und eine zweite Seite zu teilen. Dabei ist ein Einlass der Staubsammelbox für die staubbeladene Luft zu einem überwiegenden Teil auf einer Seite der Mittelebene angeordnet ist, während der Filter der Staubsammelbox zu einem überwiegenden Teil auf der anderen Seite der Mittelebene angeordnet ist.

Es ist im Sinne der Erfindung bevorzugt, dass die erste Seite des Hauptkörpers der Werkzeugmaschine und/oder der Staubsammelbox als linke Seite bezeichnet werden kann, während die zweite Seite des Hauptkörpers der Werkzeugmaschine und/oder der Staubsammelbox als rechte Seite bezeichnet werden kann. Dabei wird vorzugsweise von einer vorderen Raumrichtung auf den Hauptkörper der Werkzeugmaschine und/oder der Staubsammelbox geschaut, wobei die vordere Raumrichtung vorzugsweise durch die Position des Werkzeugs der Werkzeugmaschine festgelegt wird, während der Hauptkörper der Werkzeugmaschine vorzugsweise deren hinteren Bereich der Werkzeugmaschine und die hintere Raumrichtung festlegt. Bei dem Hauptkörper kann es sich um einen Hauptkörper der Werkzeugmaschine handeln, der beispielsweise den Motor, das Schlagwerk und/oder die Batterie der Werkzeugmaschine umfasst. Es kann im Sinne der Erfindung auch bevorzugt sein, dass es sich bei dem Hauptkörper um einen Hauptkörper der Staubsammelbox handelt. Vorzugsweise teilt die virtuelle Mittelebene den Hauptkörper der Werkzeugmaschine oder die Staubsammelbox gedanklich in zwei Seiten oder Hälften.

Es ist im Sinne der Erfindung bevorzugt, dass ein größerer Teil des Einlasses der Staubsammelbox auf der einen Seite der Werkzeugmaschine bzw. seines Hauptkörpers, angeordnet ist, während ein kleinerer Teil des Einlasses der Staubsammelbox auf der anderen Seite der Werkzeugmaschine bzw. seines Hauptkörpers, angeordnet ist. Vorzugsweise kann der größere Teil des Einlasses der Staubsammelbox im Sinne der Erfindung als «überwiegender Teil des Einlasses der Staubsammelbox bezeichnet werden.

Es ist im Sinne der Erfindung bevorzugt, dass der größere Teil, d.h. der überwiegende des Filters auf der einen Seite der Werkzeugmaschine bzw. seines Hauptkörpers, angeordnet ist, während der kleinere Teil des Filters auf der anderen Seite der Werkzeugmaschine bzw. seines Hauptkörpers, angeordnet ist, wobei die größeren Anteile des Einlasses und des Filters auf gegenüberliegenden Seiten des Hauptkörpers der Werkzeugmaschine angeordnet vorliegen.

Die Formulierung, dass ein «überwiegender» Teil eines Objekts auf einer Seite der Werkzeugmaschine oder der Staubsammelbox liegt, bedeutet im Sinne der Erfindung bevorzugt, dass das Objekt ganz oder teilweise, und wenn teilweise, mit dem größeren der mindestens zwei Teile, auf der einen Seite oder Hälfte der Werkzeugmaschine oder der Staubsammelbox liegt. Die Formulierung des überwiegenden Teils schließt mit ein, dass das Objekt vollständig auf der einen Seite oder Hälfte der Werkzeugmaschine oder der Staubsammelbox angeordnet vorliegt. Es ist im Sinne der Erfindung bevorzugt, dass ein größerer von mindestens zwei Teilen des Objekts auf der einen Hälfte der Werkzeugmaschine oder der Staubsammelbox angeordnet ist.

Das bedeutet im Sinne der Erfindung bevorzugt, dass der größere Teil des Einlasses und der kleinere Teil des Filters auf der einen Seite des Hauptkörpers der Werkzeugmaschine und/oder der Staubsammelbox angeordnet sind, während der der größere Teil des Filters und der kleinere Teil des Einlasses auf der anderen, d.h. gegenüberliegenden Seite des Hauptkörpers der Werkzeugmaschine und/oder der Staubsammelbox angeordnet sind. Die Trennung in die zwei Hälften des Hauptkörpers erfolgt dabei durch die virtuelle Mittelebene der Werkzeugmaschine und/oder der Staubsammelbox, die vorzugsweise mit der zuvor beschriebene Arbeitsebene der Werkzeugmaschine zusammenfallen kann. Es ist im Sinne der Erfindung bevorzugt, dass beispielsweise das Werkzeug der Werkzeugmaschine bzw. die Achse des Werkzeugs in der Arbeitsebene der Werkzeugmaschine liegt. Darüber hinaus kann es im Sinne der Erfindung bevorzugt sein, dass die virtuelle Mittelebene der Werkzeugmaschine den Griff der Werkzeugmaschine und, wenn die Werkzeugmaschine eine batteriebetriebene Werkzeugmaschine ist, die Batterie der Werkzeugmaschine schneidet und im Wesentlichen mittig in zwei ähnlich oder symmetrische Hälften teilt. Bei dem Griff der Werkzeugmaschine kann es sich vorzugsweise um einen sogenannten D-Griff handeln, der von einem Nutzer der Werkzeugmaschine umgriffen werden kann, um die Werkzeugmaschine zu umfassen und bei der Arbeit damit zu führen.

Mit der Erfindung ist es vorteilhafterweise möglich, eine besonders große Anzahl von Bohrlöchern zu erstellen, ohne dass der Filter ausgetauscht oder abgereinigt werden muss. Dieser Vorteil der Werkzeugmaschine kann insbesondere in allen drei Hauptanwendungsfällen der Werkzeugmaschine (Arbeiten auf dem Boden, an der Wand und über Kopf an der Decke) erreicht werden, denn in keinem der drei Hauptanwendungsfälle wird der Filter von Staub bedeckt, so dass er schnell verstopft oder blockiert wird. Durch die Anordnung und Ausgestaltung der Staubsammelbox fällt der Staub in den Hauptanwendungsfällen vorteilhafterweise neben den Filter, so dass ein «Überschwemmen» oder «Einzuckern» des Filters durch die Erfindung vermieden wird.

Ein weiterer Vorteil der Erfindung besteht darin, dass mit der Erfindung eine besonders kompakte und handlich ausgebildete Staubsammelbox bereitgestellt werden kann. Dadurch kann auch das System aus Werkzeugmaschine und Staubsammelbox besonders kompakt und handlich ausgestaltet werden, so dass die Handhabung der Werkzeugmaschine für den Nutzer erheblich erleichtert werden kann.

Mit der Erfindung kann die staubbeladene Luft von dem Einlass der Staubsammelbox zunächst in das Innere der Staubsammelbox strömen bzw. gesaugt werden, wo sich ein Teil des Staubs aus dem Luftstrom abscheidet und auf den Boden der Staubsammelbox legt. Die Luft strömt weiter durch den Filter, wobei die Staubsammelbox zur Erzeugung des Luftstroms ein Saugaggregat umfasst, welches bei der vorgeschlagenen Anordnung der Staubsammelbox in der Werkzeugmaschine von dem Luftstrom zuletzt durchströmt wird. Zu diesem Zeitpunkt ist der Luftstrom bereits im Wesentlichen staubfrei, denn der Staub hat sich entweder im Inneren der Staubsammelbox abgeschieden oder der Staub wurde von dem Filter aus dem Luftstrom herausgefiltert. Insbesondere kann mit der vorgeschlagenen Anordnung der Staubsammelbox innerhalb der Werkzeugmaschine eine besonders gute Absaugleistung erreicht werden. Die vorgeschlagene Anordnung der Staubsammelbox an der Werkzeugmaschine wird im Sinne der Erfindung als «asymmetrisch» bezeichnet. Vorzugsweise wird die Staubsammelbox der vorgeschlagenen Werkzeugmaschine im Sinne der Erfindung bevorzugt als «asymmetrische Staubsammelbox» bezeichnet, wobei die asymmetrische Anordnung der Komponenten der Staubsammelbox dadurch gekennzeichnet ist, dass der Einlass der Staubsammelbox zu einem überwiegenden Teil auf einer Seite des Hauptkörpers der Werkzeugmaschine und/oder der Staubsammelbox angeordnet ist, während der Filter der Staubsammelbox zu einem überwiegenden Teil auf der anderen bzw. gegenüberliegenden Seite des Hauptkörpers der Werkzeugmaschine und/oder der Staubsammelbox angeordnet ist. Durch die asymmetrische Anordnung der Staubsammelbox wird insbesondere erreicht, dass der Filter der Staubsammelbox in keinem der drei Hauptanwendungsfälle der Werkzeugmaschine (Arbeiten auf dem Boden, an der Wand und über Kopf an der Decke) von Staub bedeckt wird.

Dadurch kann mit der Werkzeugmaschine eine große Anzahl von Löchern gebohrt werden, ohne dass der Filter der Staubsammelbox gereinigt oder ausgetauscht werden muss. Auf diese Weise kann die Arbeitseffizienz der vorgeschlagenen Werkzeugmaschine erheblich verbessert werden.

Es ist im Sinne der Erfindung bevorzugt, dass die staubbeladene Luft von dem Arbeitsbereich durch einen Absaugkanal zu dem Einlass der Staubsammelbox führbar ist, wobei die virtuelle Mittelebene durch den Saugkanal verläuft. Mit anderen Worten liegt der Absaugkanal mittig in der Werkzeugmaschine bzw. in der Staubsammelbox vor, was dadurch zum Ausdruck kommt, dass die virtuelle Mittelebene den Saugkanal schneidet und gedanklich in zwei im Wesentlichen symmetrische Hälften teilt. Die Vorteile, die bei Staubsammelboxen mit der mittigen Anordnung des Absaugkanals um die virtuelle Mittelebene des Hauptkörpers herum verbunden sind, können somit auch mit der vorliegenden Erfindung realisiert werden. Dazu zählt insbesondere ein kompaktes Design, das eine gute und leichte Handhabung der Werkzeugmaschine ermöglicht.

Es ist im Sinne der Erfindung bevorzugt, dass der Saugkanal teleskopisch ausgestaltet ist. Dadurch kann der Absaugkanal vorteilhafterweise an unterschiedliche Längen des Werkzeugs der Werkzeugmaschine oder an unterschiedliche gewünschte Tiefen des Bohrlochs angepasst werden.

Es ist im Sinne der Erfindung bevorzugt, dass die Werkzeugmaschine eine erste Dichtung aufweist, wobei die erste Dichtung dazu eingerichtet ist, die staubbeladene Luft in die Staubsammelbox zu leiten. Vorzugsweise liegt diese erste Dichtung im Bereich des Einlasses der Staubsammelbox vor.

Es ist im Sinne der Erfindung bevorzugt, dass die Staubsammelbox eine zweite Dichtung aufweist, wobei die zweite Dichtung dazu eingerichtet ist, die gereinigte Luft von dem Filter zu einem Saugaggregat der Staubsammelbox zu leiten. Vorzugsweise liegt die zweite Dichtung in einem oberen Bereich der Staubsammelbox vor.

Es ist im Sinne der Erfindung bevorzugt, dass die Werkzeugmaschine eine erste Dichtung zur Leitung der staubbeladenen Luft in die Staubsammelbox und eine zweite Dichtung zur Leitung der gereinigten Luft von dem Filter zu einem Saugaggregat der Staubsammelbox aufweist, wobei die erste Dichtung und die zweite Dichtung in einer im Wesentlichen gleichen Raumrichtung orientiert sind. Das bedeutet im Sinne der Erfindung bevorzugt, dass die erste und die zweite Dichtung im Wesentlichen parallel vorliegen und im Wesentlichen in dieselbe Raumrichtung zeigen. Die Formulierungen «im Wesentlichen parallel» oder «im Wesentlichen in dieselbe Raumrichtung» stellen für den Fachmann keine unklaren Begriffe dar, weil der Fachmann weiß, dass beispielsweise die Formulierung «im Wesentlichen parallel» kleine Abweichungen von einer exakten mathematischen Parallelität einschließen kann, wobei solche kleinen Abweichungen beispielsweise in einem Bereich von +/- 5 Grad der exakten mathematischen Parallelität liegen können.

Es ist im Sinne der Erfindung ganz besonders bevorzugt, dass die erste Dichtung und die zweite Dichtung innerhalb der Werkzeugmaschine bzw. innerhalb der Staubsammelbox auf gleicher Höhe angeordnet vorliegen. Auf diese Weise können die Dichtungen besonders kostengünstig hergestellt werden. Darüber hinaus hat sich gezeigt, dass Dichtungen, die auf die beschriebene Weise angeordnet sind, besonders dicht sind und eine gute Dichtwirkung bei gleichzeitig geringem Aufwand aufweisen. Dadurch kann die vorhandene Saugleistung des Saugaggregats der Staubsammelbox besonders gut ausgenutzt werden und unerwünschte Leckagen werden wirksam verhindern.

Des Weiteren kann auf diese Weise ein Luftleitelement einteilig ausgeführt werden, wodurch die ohnehin gute Dichtwirkung der Dichtungen der Staubsammelbox weiter verbessert werden kann. Es ist somit im Sinne der Erfindung bevorzugt, dass die Staubsammelbox ein Luftleitelement aufweist, wobei das Luftleitelement einteilig ausgebildet ist. Das Luftleitelement kann beispielsweise als Luftleitblech ausgebildet sein. Es kann aber im Sinne der Erfindung auch bevorzugt sein, dass das Luftleitelement Kunststoff umfasst oder aus Kunststoff gebildet ist. Das Luftleitelement kann einen perforierten Boden aufweisen, durch den der Luftstrom in eine Ansaugkammer des Saugaggregats der Staubsammelbox eindringen kann.

Es ist im Sinne der Erfindung bevorzugt, dass die Staubsammelbox eine dritte Dichtung aufweist, wobei die dritte Dichtung dazu eingerichtet ist, einen oberen Bereich der Staubsammelbox gegenüber einem unteren Bereich der Staubsammelbox abzudichten.

Es ist im Sinne der Erfindung bevorzugt, dass mindestens eine der Dichtungen in einem Filterrahmen der Staubsammelbox integriert vorliegt. Es ist im Sinne der Erfindung bevorzugt, dass zwei Dichtungen und besonders bevorzugt alle drei Dichtungen in einem Filterrahmen der Staubsammelbox integriert vorliegen. Durch die Integration der Dichtungen in den Rahmen des Filters wird ein regelmäßiger Austausch der Dichtungen der Staubsammelbox bewirkt, so dass mit der Erfindung regemäßig eine «so gut wie neu»-Dichtwirkung der Dichtungen der Staubsammelbox gewährleistet werden kann. Es hat sich gezeigt, dass durch den regelmäßigen Austausch der Dichtungen der Staubsammelbox deren Lebenszeit vorteilhafterweise erheblich verlängert werden kann.

In der Staubsammelbox wird vorzugsweise ein Filter aus gefalteten Filterpapieren verwendet. Der so ausgestaltete Filter weist vorzugsweise Lamellen auf, die von dem zu reinigenden Luftstrom durchströmt werden. Vorzugsweise kann ein solcher Filter im Sinne der Erfindung als Lamellenfilter bezeichnet werden. Durch die vorgeschlagene Anordnung des Filters in der Staubsammelbox kann vorteilhafterweise sichergestellt werden, dass der direkte Weg bzw. die kürzeste Verbindung vom Einlass der Staubsammelbox in Richtung des Filters im Wesentlichen parallel zu einer Normalenrichtung den Lamellen des Filters verläuft. Dies führt vorteilhafterweise dazu, dass der zunächst staubbeladene Luftstrom auf diese Weise im Wesentlichen nur direkten Kontakt mit der äußeren Lamelle des Filters hat und so nur diese verunreinigen und verstopfen kann. Um zu den inneren Lamellen zu gelangen, ist es im Sinne der Erfindung bevorzugt, dass der Luftstrom mehrfach umgelenkt wird. Dadurch kann sich die Staubfracht des Luftstroms reduzieren und die Luft wird gefiltert. Dadurch wird insbesondere vermieden, dass die innenliegenden Filterlagen des Filters verunreinigt werden und verstopfen. Es ist im Sinne der Erfindung bevorzugt, dass der Filter als Lamellenfilter ausgestaltet ist, wobei der direkte Weg und/oder die kürzeste Verbindung durch die Staubsammelbox im Wesentlichen senkrecht auf die Lamellen des Lamellenfilters trifft.

Es hat sich gezeigt, dass durch die Ausgestaltung des Filters als Lamellenfilters und durch die Führung des Luftstroms durch die Staubsammelbox ein Filter mit weniger Lamellen als bei konventionellen Staubboxen, wie sie aus dem Stand der Technik bekannt sind, verwendet werden kann. Dadurch kann der Filter besonders kompakt und raumsparend ausgebildet werden und die Staubsammelbox insgesamt kompakt gehalten werden. Darüber hinaus können die Herstellungskosten für den Filter durch die Reduktion der Anzahl der Lamellen verringert werden. Außerdem hat sich gezeigt, dass der Luftstrom durch die vorgeschlagene Anordnung und Ausgestaltung des Filters positiv beeinflusst werden kann, da eine besonders große Kontaktfläche zwischen Filter und Luftstrom bereitgestellt wird.

In einem zweiten Aspekt betrifft die Erfindung eine Staubsammelbox für eine vorgeschlagene Werkzeugmaschine, wobei die Staubsammelbox dazu eingerichtet ist, staubbeladene Luft aus einem Arbeitsbereich der Werkzeugmaschine abzusaugen und den Staub aus der staubbeladenen Luft mittels eines Filters herauszufiltern, so dass der Staub in einem Innenraum der Staubsammelbox bis zu einer Entleerung gesammelt werden kann. Es kann eine virtuelle Mittelebene durch die Staubsammelbox gelegt werden, wobei die virtuelle Mittelebene dazu eingerichtet ist, die Staubsammelbox in einer Schnittdarstellung von einer vorderen Raumrichtung blickend in eine erste Seite und eine zweite Seite zu teilen, wobei ein Einlass der Staubsammelbox für die staubbeladene Luft zu einem überwiegenden Teil auf einer Seite der Staubsammelbox angeordnet ist, während der Filter der Staubsammelbox zu einem überwiegendem Teil auf der anderen Seite der Staubsammelbox angeordnet ist. Die für die Werkzeugmaschine eingeführten Begriffe, Definitionen und technischen Vorteile gelten vorzugsweise für die Staubsammelbox analog.

Vorzugsweise teilt die virtuelle Mittelachse die Staubsammelbox bzw. ihren Hauptkörper in zwei Hälften, die vorzugsweise als erste Hälfte und als zweite Hälfte der Staubsammelbox bezeichnet werden. Die Hälften der Staubsammelbox sind vorzugswese im Wesentlichen gleich oder ähnlich groß.

Es ist im Sinne der Erfindung bevorzugt, dass die erste Seite der Staubsammelbox als linke Seite bezeichnet werden kann, während die zweite Seite der Staubsammelbox als rechte Seite bezeichnet werden kann. Dabei wird von einer vorderen Raumrichtung auf die Staubsammelbox geschaut, wobei die Vorderseite bzw. die vordere Raumrichtung der Staubsammelbox vorzugsweise durch die Position des Filters und die Rückseite bzw. die hintere Raumrichtung der Staubsammelbox durch die Position des Einlasses für die staubbeladene Luft festgelegt wird.

Es ist im Sinne der Erfindung bevorzugt, dass ein größerer Teil des Einlasses der Staubsammelbox auf der einen Seite der Staubsammelbox angeordnet ist, während ein kleinerer Teil des Einlasses der Staubsammelbox auf der anderen Seite der Staubsammelbox angeordnet ist. Es ist im Sinne der Erfindung darüber hinaus bevorzugt, dass der größere Teil, d.h. der überwiegende des Filters, auf der einen Seite der Staubsammelbox angeordnet ist, während der kleinere Teil des Filters auf der anderen Seite der Staubsammelbox angeordnet ist, wobei die größeren Anteile des Einlasses und des Filters auf jeweils gegenüberliegenden Seiten der Staubsammelbox angeordnet vorliegen.

Es ist im Sinne der Erfindung bevorzugt, dass mindestens eine Dichtung der Staubsammelbox in einem Filterrahmen der Staubsammelbox integriert vorliegt. Darüber hinaus kann es im Sinne der Erfindung bevorzugt sein, dass der Filter als Lamellenfilter ausgestaltet ist, wobei der Luftstrom durch die Staubsammelbox im Wesentlichen senkrecht auf die Lamellen des Lamellenfilters trifft.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: Vorderansicht einer bevorzugten Ausgestaltung der Staubsammelbox mit virtueller Mittelebene
- Fig. 2: Seitenansicht einer bevorzugten Ausgestaltung der Staubsammelbox
- Fig. 3: schematische Darstellung einer bevorzugten Ausgestaltung einer Werkzeugmaschine, sowie des Aufspannens der virtuellen Mittelebene
- Fig. 4: schematische Darstellung einer bevorzugten Ausgestaltung einer Werkzeugmaschine mit Staubsammelbox
- Fig. 5: schematische Darstellung einer bevorzugten Ausgestaltung einer Werkzeugmaschine mit Staubsammelbox, sowie deren Einlass- und Auslassbereichen
- Fig. 6: weitere schematische Darstellung einer bevorzugten Ausgestaltung einer Werkzeugmaschine mit Staubsammelbox, sowie deren Einlass- und Auslassbereichen
- Fig. 7: schematische Darstellung einer bevorzugten der Staubsammelbox und ihrer Komponenten

### Ausführungsbeispiele und Figurenbeschreibung:

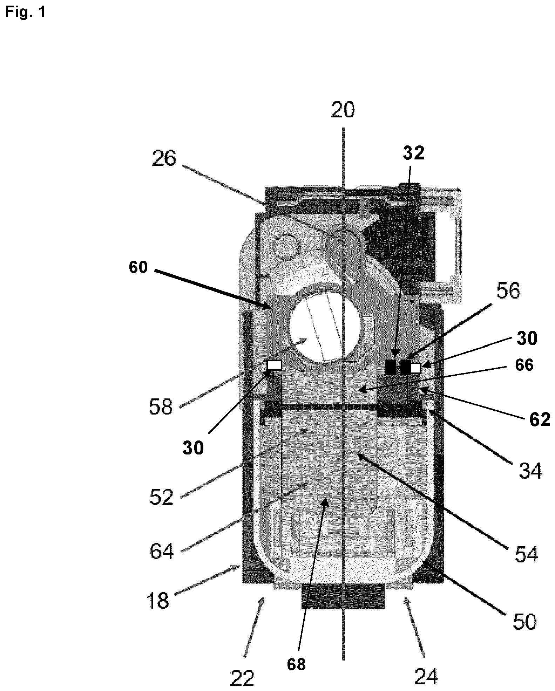

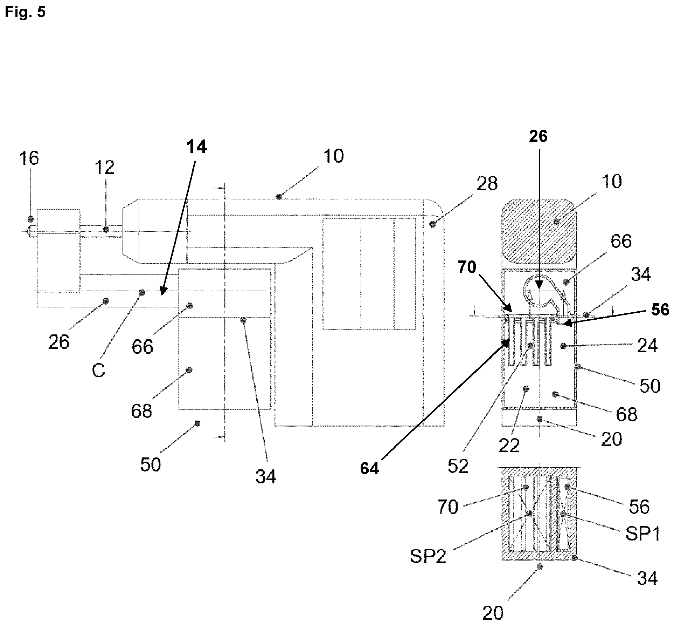

Figur 1 zeigt eine Vorderansicht einer bevorzugten Ausgestaltung der Staubsammelbox 50 mit virtueller Mittelebene 20. Wie aus Figur 1 hervorgeht, teilt die virtuelle Mittelebene 20 die Staubsammelbox 50 in zwei im Wesentlichen gleich oder ähnlich große Hälften 22, 24. Die erste oder linke Hälfte 22 in dem in Figur 1 dargestellten Ausführungsbeispiel umfasst den überwiegenden Teil des Filters 52 der Staubsammelbox 50, während die zweite oder rechte Hälfte 24 der Staubsammelbox 50 den überwiegenden Teil des Einlasses 56 für die staubbeladene Luft 14 (siehe Fig. 5) umfasst. Die Staubsammelbox 50 weist einen inneren Bereich 54 auf, wobei der innere Bereich 54 der Staubsammelbox 50 vorzugsweise als Staubsammelbehälter dient. Der innere Bereich 54 der Staubsammelbox 50 bzw. die Staubsammelbox 50 kann durch eine dritte Dichtung 34 in einen oberen Bereich 66 und in einen unteren Bereich 68 unterteilt werden. Der Filter 52 der Staubsammelbox 50 wird vorzugsweise von einem Lamellenfilter mit Lamellen 64 gebildet.

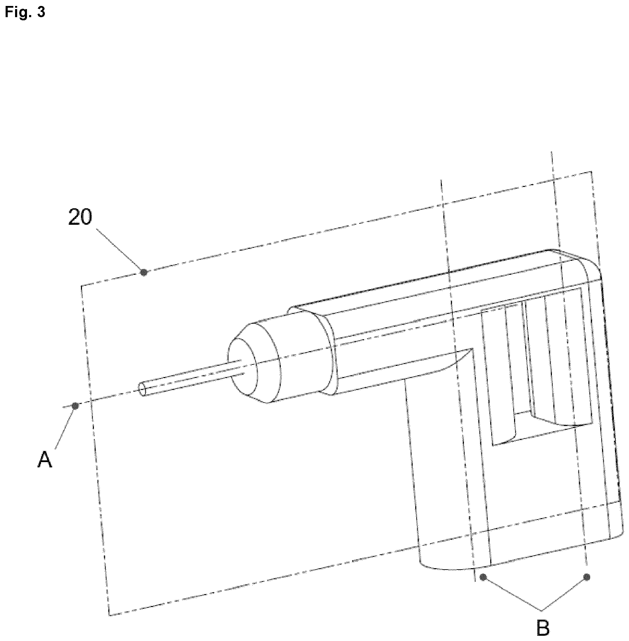

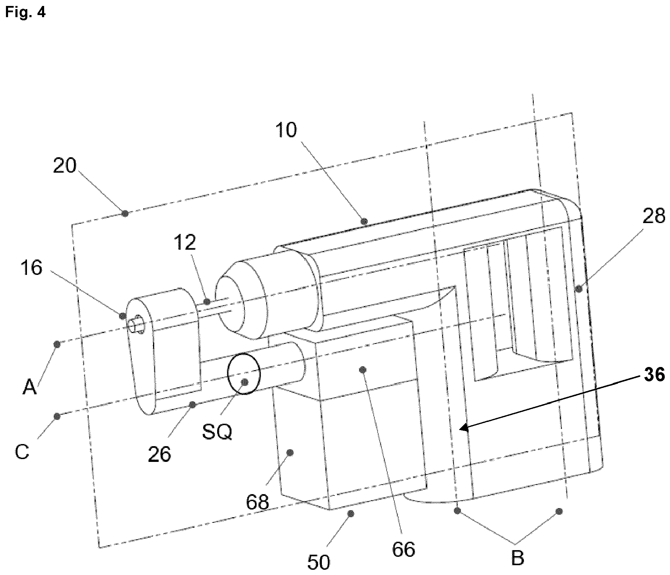

Die die staubbeladene Luft 14 wird im Arbeitsbereich 16 (siehe Fig. 4) der Werkzeugmaschine 10 (siehe Fig. 3) eingesaugt und über den Absaugkanal 26 in Richtung des Einlasses 56 der Staubsammelbox 50 transportiert. Die staubbeladene Luft 14 passiert den Einlass 56 und gelangt dadurch in das Innere 54 der Staubsammelbox 50, wo sich der überwiegende Teil des Staubs auf dem Boden oder auf dem tiefsten Teil der Staubsammelbox 50, je nach Arbeitsrichtung, abscheidet. Der Luftstrom wird durch den sich anschließenden Filter 52 in Richtung des Saugaggregats 58 gesaugt. Von dort tritt die Luft durch einen perforierten Boden des Luftleitelements 60 in die Ansaugkammer des Lüfters 58. Nachdem die Luft vom Saugaggregat 58 auf ein erhöhtes Druck-Niveau gebracht wurde, strömt sie durch Auslassschlitze aus der Staubsammelbox 50.

In Fig. 1 sind auch die erste Dichtung 30 und die zweite Dichtung 32 dargestellt. Die erste Dichtung 30 wird durch weiße Klötzchen symbolisiert, während die zweite Dichtung 32 durch schwarze Klötzchen symbolisiert wird. Außerdem wird in Fig. 1 der Filterrahmen 62 abgebildet, in dem die Dichtungen 30, 32, 34 integriert vorliegen können.

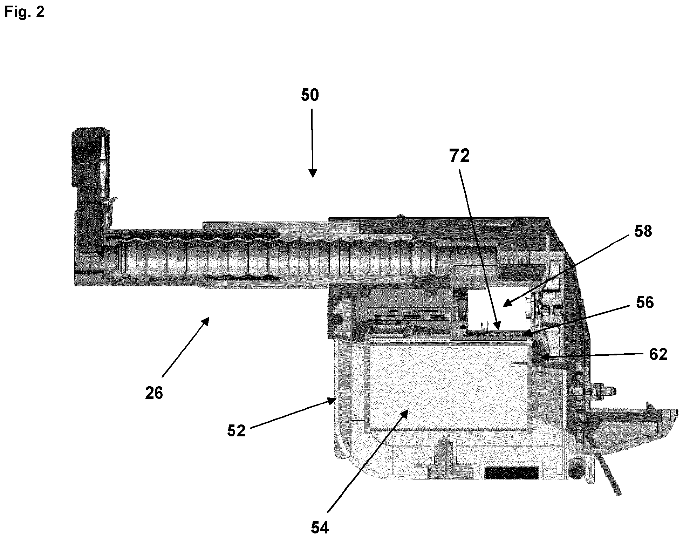

Figur 2 zeigt eine Darstellung einer bevorzugten Ausgestaltung der Staubsammelbox 50 mit Absaugkanal 26 und Staubsammelbehälter 54. Außerdem wird in Figur 2 eine Perforation 72 im Bereich des Einlassbereichs 56 der Staubsammelbox 50 gezeigt, sowie der Filterrahmen 62.

Fig. 3 zeigt eine schematische Darstellung einer bevorzugten Ausgestaltung einer Werkzeugmaschine 10, sowie des Aufspannens der virtuellen Mittelebene 20. Die virtuelle Mittelebene 20 wird vorzugsweise durch eine erste Achse A und eine zweite Achse B aufgespannt. Bei der ersten Achse A handelt es sich vorzugsweise um die Dreh- und/oder Schlagachse der Werkzeugmaschine 10. Bei der zweiten Achse B handelt es sich vorzugsweise um die Motor- oder Hauptgriffachse der Werkzeugmaschine 10. Die erste Achse A und die zweite Achse B stehen vorzugsweise senkrecht aufeinander und spannen so die virtuelle Mittelebene 20 auf.

Fig. 4 zeigt eine schematische Darstellung einer bevorzugten Ausgestaltung einer Werkzeugmaschine 10 mit Staubsammelbox 50. Dargestellt sind in Fig, 4 das Werkzeug 12, der Griff 28, der Absaugkanal 26 und der Arbeitsbereich 16 der Werkzeugmaschine 10. Durch den Absaugkanal 26 verläuft vorzugsweise die dritte Achse C, die in dem in Fig. 4 gezeigten Ausführungsbeispiel der Erfindung im Wesentlichen parallel zu der ersten Achse A der Werkzeugmaschine 10 verläuft. Die erste Achse A und die dritte Achse C verlaufen im Wesentlichen senkrecht zu der zweiten Achse B. Durch den Absaugkanal 26 wird die staubbehaftete Luft 14 von dem Arbeitsbereich 16 der Werkzeugmaschine 10 in Richtung der Staubsammelbox 10 gesaugt. Ursächlich dafür ist das Saugaggregat 58 der Staubsammelbox 50, das einen Unterdruck und dadurch einen Saugstrom erzeugt. Der Absaugkanal 26 weist einen Strömungsquerschnitt SQ auf, durch den die staubbeladene Luft 14 in Richtung der Staubsammelbox 50 strömt. Die Achse C, die vorzugsweise mittig bzw. zentral durch den Absaugkanal 26 verläuft, steht vorzugsweise senkrecht auf dem Strömungsquerschnitt SQ des Absaugkanals 26. Es ist im Sinne der Erfindung bevorzugt, dass die staubbeladene Luft 14 entlang der dritten Achse C strömt, so dass eine Strömungsrichtung der staubbeladenen Luft und die dritte Achse C im Wesentlichen parallel oder kollinear zueinander verlaufen. Es ist im Sinne der Erfindung bevorzugt, dass die zweite Achse B durch den Motor 36 der Werkzeugmaschine 10 hindurch verläuft. Alternativ verläuft die zweite Achse B vorzugsweise durch den Handgriff 28 der Werkzeugmaschine 10. Dieser Handgriff 28 kann vorzugsweise als sog. Pistolenhandgriff ausgebildet sein.

In Fig. 4 wird auch eine bevorzugte Ausgestaltung der Staubsammelbox 50 gezeigt. Die Staubsammelbox 50 weist einen unteren Bereich 68 mit einem Einlass 56, einem Filter 52 und einem Auslass 70 auf, sowie einen oberen Bereich 66. Die staubbeladene Luft gelangt von dem Absaugkanal 26 der Werkzeugmaschine 10 über den Einlass 56 in die Staubsammelbox 50. Dort kann sich ein Teil des Staubs im tiefstliegenden Bereich der Staubsammelbox 50 ablagern, wobei die Luft durch den Unterdruck, der von dem Saugaggregat 58 erzeugt wird, weiter in Richtung Saugaggregat 58 gesaugt wird bzw. dorthin strömt. Dabei passiert die Luft den Übergangsbereich zwischen dem unteren Bereich 68 und dem oberen Bereich 66 der Staubsammelbox 50, wobei in diesem Übergangsbereich der Filter 52 angeordnet ist. Der Filter 52 ist dazu eingerichtet, die staubbeladene Luft zu filtern, so dass insbesondere staubarme bzw. gefilterte Luft in den oberen Bereich 66 der Staubsammelbox 50 gelangt.

Die Staubsammelbox 50 kann verschiedene Dichtungen 30, 32, 34 aufweisen, wobei die erste Dichtung 30 dazu eingerichtet ist, die staubbeladene Luft 14 in die Staubsammelbox 50 zu leiten. Mit der zweiten Dichtung 32 kann die gereinigte Luft von dem Filter 52 zu einem Saugaggregat 58 oder Lüfter 58 der Staubsammelbox 50 geleitet werden. Die dritte Dichtung 34 ist dazu eingerichtet, die Staubsammelbox 50 in einen oberen Bereich 66 und einen unteren Bereich 68 zu trennen (siehe Fig. 4 bis 7). Der untere Bereich 68 der Staubsammelbox 50 umfasst den Einlass 56 und den Auslass 70 der Staubsammelbox 50, wobei im Bereich des Auslasses 70 der Filter 52 angeordnet ist. Der Filter 52 stellt den Übergang zwischen dem unteren Bereich 68 und dem oberen Bereich 66 der Staubsammelbox 50 dar, wobei in dem unteren Bereich 68 staubbehaftete Luft vorhanden ist und in dem oberen Bereich 66 staubarme Luft. Der Filter 52 ist vorzugsweise als Lamellenfilter mit Lamellen 64 ausgestaltet und dazu eingerichtet, Staub aus dem Luftstrom herauszufiltern. Dadurch reduziert sich die Staublast der Luft beim Durchgang durch den Filter 52 bzw. beim Übergang von dem unteren Bereich 68 in den oberen Bereich 66 der Staubsammelbox 50.

Fig. 5 zeigt eine schematische Darstellung einer bevorzugten Ausgestaltung einer Werkzeugmaschine 10 mit Staubsammelbox 50, sowie deren Einlassbereich 56 und Auslassbereich 70. Auf der linken Seite von Fig. 5 ist eine bevorzugte Ausgestaltung der Werkzeugmaschine 10 dargestellt, die ein Werkzeug 12, einen Handgriff 28 und einen Absaugkanal 26 aufweist. Im Arbeitsbereich 16 der Werkzeugmaschine 10 kann ein Untergrund (nicht dargestellt) bearbeitet werden, wobei bei dieser Bearbeitung Staub und Dreck anfällt, der mit Hilfe der Staubsammelbox 50 abgesaugt werden kann.

Auf der rechten, oberen Seite der Fig. 5 ist ein Schnitt durch die Werkzeugmaschine 10 gezeigt. Dabei zeigt die Schnittdarstellung im oberen Bereich die Werkzeugmaschine 10 und darunter die Staubsammelbox 50. Die Staubsammelbox 50 ist in einen oberen Bereich 66 und in einen unteren Bereich 68 geteilt, wobei zwischen den oberen Bereich 66 und dem unteren Bereich 68 der Filter 52 der Staubsammelbox 50 angeordnet vorliegt. Außerdem kann in dem Übergangsbereich zwischen dem unteren Bereich 68 und dem oberen Bereich 66 der Staubsammelbox 50 eine dritte Dichtung 34 vorgesehen sein, die die Bereiche 66, 68 der Staubsammelbox 50 gegeneinander abdichtet. Durch die Vorsehung der dritten Dichtung 34 kann der Bereich 68 der Staubsammelbox 50, in dem sich staubbeladene Luft befindet, von dem Bereich 66 der Staubsammelbox 50, in dem sich staubarme Luft befindet, abgedichtet werden.

In Fig. 5 ist auch die virtuelle Ebene 20 dargestellt, die die Staubsammelbox 50 bzw. die Werkzeugmaschine 10 in eine erste Hälfte 22 und eine zweite Hälfte 24 teilt. In der ersten Hälfte 22 befindet sich vorzugsweise der überwiegende Teil des Filters 52 der Staubsammelbox 52, während in der zweiten Hälfte 24 der überwiegende Teil des Einlassbereichs 56 der Staubsammelbox vorgesehen ist. Der Einlassbereich 56 der Staubsammelbox weist einen Strömungs- oder Einlassquerschnitt auf, der einen ersten Flächenschwerpunkt SP1 aufweisen kann. Wenn der Einlassquerschnitt beispielsweise rechteckig ausgebildet ist, kann der erste Flächenschwerpunkt SP1 beispielsweise dem Schnittpunkt der Diagonalen des Einlassquerschnitts entsprechen. Der Einlassbereich 56 und sein erster Flächenschwerpunkt SP1 liegen vorzugsweise in der ersten Hälfte 22 der Werkzeugmaschine 10 bzw. der Staubsammelbox 50 vor. In analoger Weise kann ein zweiter Flächenschwerpunkt SP2 für den Auslassbereich 70 der Staubsammelbox 50 definiert werden, wobei der Auslassbereich 70 und sein zweiter Flächenschwerpunkt SP2 vorzugsweise in der zweiten Hälfte 24 der Werkzeugmaschine 10 bzw. der Staubsammelbox 50 vorliegen.

Auf der rechten, unteren Seite der Fig. 5 ist ein weiterer Schnitt durch die Werkzeugmaschine 10 gezeigt, wobei diese Schnittdarstellung den Übergangsbereich zwischen dem unteren Bereich 68 und dem oberen Bereich 66 der Staubsammelbox 50 zeigt. In diesem Übergangsbereich können der Filter 52 und die dritte Dichtung 34 der Staubsammelbox 50 angeordnet vorliegen. Insbesondere zeigt der rechte, untere Seite der Fig. 5 die Anordnung des Einlassbereichs 56 und des Auslassbereichs 70 der Staubsammelbox 50 auf den unterschiedlichen Seiten 22, 24 der Staubsammelbox 50. Während der Einlassbereich 56 und der erste Flächenschwerpunkt SP1 der Staubsammelbox 50 auf der ersten Seite 22 der virtuellen Mittelebene 20 vorliegen, liegen der Auslassbereich 70 und der zweite Flächenschwerpunkt SP2 der Staubsammelbox 50 auf der zweiten Seite 24 der virtuellen Mittelebene 20 vor.

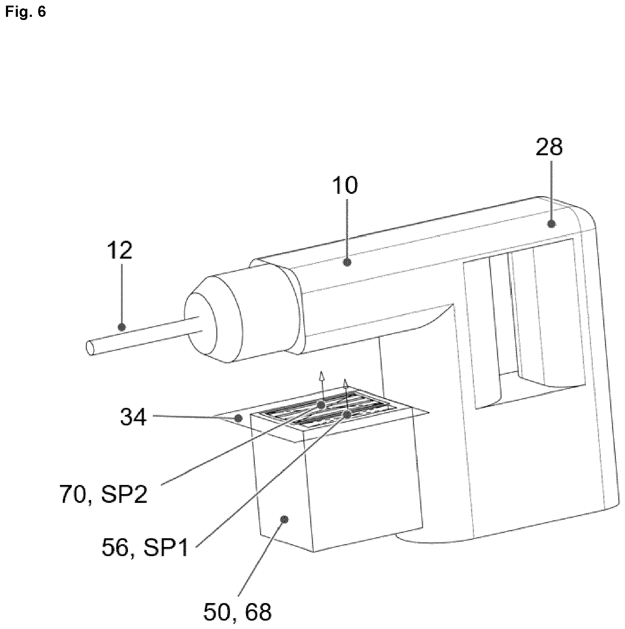

Fig. 6 zeigt eine weitere schematische Darstellung einer bevorzugten Ausgestaltung einer Werkzeugmaschine 10 mit Staubsammelbox 50, sowie deren Einlassbereich 56 und Auslassbereich 70. Insbesondere wird in Figur 6 der untere Bereich 68 der Staubsammelbox 50 gezeigt, um die Lage des Einlassbereichs 56 und des ersten Flächenschwerpunkts SP1, sowie die Lage des Auslassbereichs 70 und des zweiten Flächenschwerpunkts SP2 darzustellen. Darüber hinaus zeigt Fig. 6 die dritte Dichtung 34, die eine Dichtebene zur Abdichtung des oberen Bereichs 66 und des unteren Bereichs 68 der Staubsammelbox 50 voneinander darstellen kann.

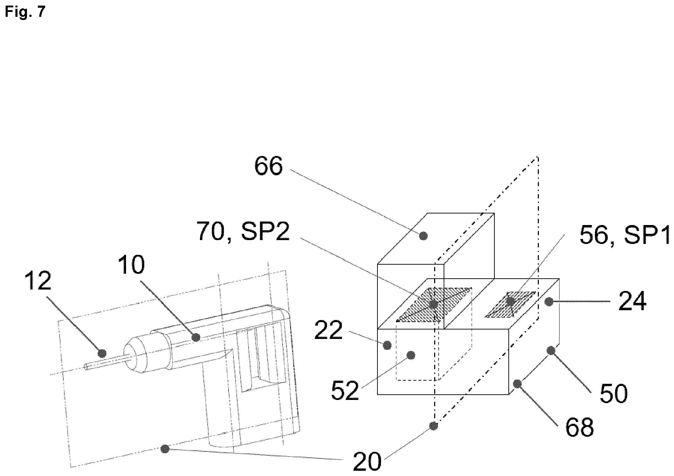

Fig. 7 zeigt eine schematische Darstellung einer bevorzugten der Staubsammelbox 50 und ihrer Komponenten. Insbesondere zeigt Fig. 7 die virtuelle Mittelebene 20, die die Staubsammelbox 50 in eine erste Hälfte 22 und eine zweite Hälfte 24 teilt. Auf der ersten Seite 22 der Staubsammelbox 50 liegen der Filter 52, der Auslassbereich 70 und sein Flächenschwerpunkt SP2 vor, während auf der zweiten Seite 24 der Einlassbereich 56 und sein Flächenschwerpunkt SP1 vorliegen. Während die virtuelle Mittelebene 20 die Staubsammelbox 50 bzw. die Werkzeugmaschine 10 in vertikaler Richtung in zwei Hälften 22, 24 teilt, ist die Staubsammelbox 50 in horizontaler Richtung in einen oberen Bereich 66 und einen unteren Bereich 68 unterteilt. Im Übergangsbereich zwischen den Bereichen 66, 68 der Staubsammelbox 50 können der Filter 52 und die dritte Dichtung 34 der Staubsammelbox 50 vorliegen.

### Bezugszeichenliste

- 10: Werkzeugmaschine
- 12: Werkzeug
- 14: staubbeladene Luft
- 16: Arbeitsbereich der Werkzeugmaschine
- 18: Hauptkörper der Werkzeugmaschine
- 20: virtuelle Mittelebene
- 22: erste Seite bzw. erste Hälfte
- 24: zweite Seite bzw. zweite Hälfte
- 26: Saugkanal
- 28: Griff der Werkzeugmaschine, insbesondere Pistolengriff
- 30: erste Dichtung
- 32: zweite Dichtung
- 34: dritte Dichtung
- 36: Motor der Werkzeugmaschine
- 50: Staubsammelbox
- 52: Filter
- 54: Innenraum der Stausammelbox
- 56: Einlass der Stausammelbox
- 58: Saugaggregat der Stausammelbox
- 60: Luftleitelement
- 62: Filterrahmen
- 64: Lamellen
- 66: oberere Bereich der Stausammelbox
- 68: unterer Bereich der Stausammelbox
- 70: Auslass der Stausammelbox
- 72: Perforation im Bereich des Einlassbereichs der Staubsammelbox
- A: erste Achse (Dreh- und/oder Schlagachse)
- B: zweite Achse (Motor- oder Hauptgriffachse)
- C: dritte Achse (Achse durch den Saugkanal)
- SQ: Strömungsquerschnitt
- SP1: erster Flächenschwerpunkt, Flächenschwerpunkt des Einlassquerschnitts
- SP2: zweiter Flächenschwerpunkt, Flächenschwerpunkt des Auslassquerschnitts

## Patentansprüche

1. Werkzeugmaschine (10), die mit einem länglichen, sich in eine Raumrichtung nach vorne erstreckenden Werkzeug (12) verbindbar ist, wobei die Werkzeugmaschine (10) dazu eingerichtet ist, das Werkzeug (12) zu einer drehenden und/oder schlagenden Bewegung anzutreiben, wobei die Werkzeugmaschine (10) eine Staubsammelbox (50) umfasst und mit dieser lösbar verbindbar ist, wobei die Staubsammelbox (50) dazu eingerichtet ist, staubbeladene Luft (14) aus einem Arbeitsbereich (16) der Werkzeugmaschine (10) abzusaugen und den Staub aus der staubbeladenen Luft (14) mittels eines Filters (52) herauszufiltern, so dass der Staub in einem Innenraum (54) der Staubsammelbox (50) bis zu einer Entleerung gesammelt werden kann,
**dadurch gekennzeichnet, dass**
eine virtuelle Mittelebene (20) durch einen Hauptkörper (18) der Werkzeugmaschine (10) und/oder der Staubsammelbox (50) gelegt werden kann, wobei die virtuelle Mittelebene (20) dazu eingerichtet ist, den Hauptkörper (18) in einer Schnittdarstellung von einer vorderen Raumrichtung blickend in eine erste Seite (22) und eine zweite Seite (24) zu teilen, wobei ein Einlass (56) der Staubsammelbox (50) für die staubbeladene Luft (14) zu einem überwiegenden Teil auf einer Seite (22, 24) der virtuellen Mittelebene (20) angeordnet ist, während der Filter (52) der Staubsammelbox (50) zu einem überwiegendem Teil auf der anderen Seite (24, 22) der virtuellen Mittelebene (20) angeordnet ist.

2. Werkzeugmaschine (10) nach Anspruch 1
**dadurch gekennzeichnet, dass**
die staubbeladene Luft (14) von dem Arbeitsbereich (16) durch einen Saugkanal (26) zu dem Einlass (56) der Staubsammelbox (50) führbar ist, wobei die virtuelle Mittelebene (20) durch den Saugkanal (26) verläuft.

3. Werkzeugmaschine (10) nach Anspruch 2
**dadurch gekennzeichnet, dass**
der Saugkanal (26) teleskopisch ausgestaltet ist.

4. Werkzeugmaschine (10) nach einem der vorhergehenden Ansprüche
**dadurch gekennzeichnet, dass**
die Werkzeugmaschine (10) eine erste Dichtung (30) aufweist, wobei die erste Dichtung (30) dazu eingerichtet ist, die staubbeladene Luft (14) in die Staubsammelbox (50) zu leiten.

5. Werkzeugmaschine (10) nach einem der vorhergehenden Ansprüche
**dadurch gekennzeichnet, dass**
die Staubsammelbox (50) eine zweite Dichtung (32) aufweist, wobei die zweite Dichtung (32) dazu eingerichtet ist, die gereinigte Luft von dem Filter (52) zu einem Saugaggregat (58) der Staubsammelbox (50) zu leiten.

6. Werkzeugmaschine (10) nach einem der vorhergehenden Ansprüche
**dadurch gekennzeichnet, dass**
die Werkzeugmaschine (10) eine erste Dichtung (30) zur Leitung der staubbeladenen Luft (14) in die Staubsammelbox (50) und eine zweite Dichtung (32) zur Leitung der gereinigten Luft von dem Filter (52) zu einem Saugaggregat (58) der Staubsammelbox (50) aufweist, wobei die erste Dichtung (30) und die zweite Dichtung (32) in einer im Wesentlichen gleichen Raumrichtung orientiert sind.

7. Werkzeugmaschine (10) nach einem der vorhergehenden Ansprüche
**dadurch gekennzeichnet, dass**
die Staubsammelbox (50) ein Luftleitelement (60) aufweist, wobei das Luftleitelement (60) einteilig ausgebildet ist.

8. Werkzeugmaschine (10) nach einem der vorhergehenden Ansprüche
**dadurch gekennzeichnet, dass**
die Staubsammelbox (50) eine dritte Dichtung (34) aufweist, wobei die dritte Dichtung (34) dazu eingerichtet ist, einen oberen Bereich (66) der Staubsammelbox (50) gegenüber einem unteren Bereich (68) der Staubsammelbox (50) abzudichten.

9. Werkzeugmaschine (10) nach einem der Ansprüche 4 bis 8
**dadurch gekennzeichnet, dass**
mindestens eine der Dichtungen (30, 32, 34) in einem Filterrahmen (62) der Staubsammelbox (50) integriert vorliegt.

10. Werkzeugmaschine (10) nach einem der vorhergehenden Ansprüche
**dadurch gekennzeichnet, dass**
der Filter (52) als Lamellenfilter ausgestaltet ist, wobei der Luftstrom durch die Staubsammelbox (50) im Wesentlichen senkrecht auf die Lamellen (64) des Lamellenfilters trifft.

11. Staubsammelbox (50) für eine Werkzeugmaschine (10) nach einem der Ansprüche 1 bis 10, wobei die Staubsammelbox (50) dazu eingerichtet ist, staubbeladene Luft (14) aus einem Arbeitsbereich (16) der Werkzeugmaschine (10) abzusaugen und den Staub aus der staubbeladenen Luft (14) mittels eines Filters (52) herauszufiltern, so dass der Staub in einem Innenraum (54) der Staubsammelbox (50) bis zu einer Entleerung gesammelt werden kann,
**dadurch gekennzeichnet, dass**
eine virtuelle Mittelebene (20) durch die Staubsammelbox (50) gelegt werden kann, wobei die virtuelle Mittelebene (20) dazu eingerichtet ist, die Staubsammelbox (50) in einer Schnittdarstellung von einer vorderen Raumrichtung blickend in eine erste Seite (22) und eine zweite Seite (24) zu teilen, wobei ein Einlass (56) der Staubsammelbox (50) für die staubbeladene Luft (14) zu einem überwiegenden Teil auf einer Seite (22, 24) der Staubsammelbox (50) angeordnet ist, während der Filter (52) der Staubsammelbox (50) zu einem überwiegendem Teil auf der anderen Seite (24, 22) der Staubsammelbox (50) angeordnet ist.

12. Staubsammelbox (50) nach Anspruch 11
**dadurch gekennzeichnet, dass**
mindestens eine Dichtung (30, 32, 34) der Staubsammelbox (50) in einem Filterrahmen (62) der Staubsammelbox (50) integriert vorliegt.

13. Staubsammelbox (50) nach Anspruch 11 oder 12
**dadurch gekennzeichnet, dass**
der Filter (52) als Lamellenfilter ausgestaltet ist, wobei der Luftstrom durch die Staubsammelbox (50) im Wesentlichen senkrecht auf die Lamellen (64) des Lamellenfilters trifft.
